Europäisches Patentamt

European Patent Office

Office européen des brevets

⑪ Veröffentlichungsnummer **0 021 482 B1**

# EUROPÄISCHE PATENTSCHRIFT

(45) Veröffentlichungstag der Patentschrift
02.03.83

㉑ Anmeldenummer 80200513.2

㉒ Anmeldetag 03.06.80

(51) Int Cl³ **C 21 C 5/40**

54 Verfahren und Vorrichtung zur Verhinderung des Gasaustritts aus der Beschickungsöffnung einer Konverter-Umkleidung.

(30) Priorität: 05.06.79 DE 2922765

(43) Veröffentlichungstag der Anmeldung:
07.01.81 Patentblatt 81/1

(45) Bekanntmachung des Hinweises auf die Patenterteilung:
02.03.83 Patentblatt 83/9

(84) Benannte Vertragsstaaten:
BE DE FR GB IT LU SE

(56) Entgegenhaltungen:
DE-A-2 257 796
DE-A-2 346 067
DE-A-2 648 790
DE-A-2 753 414
DE-B-2 233 443
DE-C-0 733 935
DE-U-7 209 128
US-A-3 724 827
US-A-4 081 269

(73) Patentinhaber: METALLGESELLSCHAFT AG,
Reuterweg 14 Postfach 3724, D-6000 Frankfurt/M.1 (DE)
Patentinhaber: VOEST-ALPINE Aktiengesellschaft,
Werksgelände, A-4010 Linz (AT)
Patentinhaber: UNION SIDERURGIQUE DU NORD ET
DE L'EST DE LA FRANCE par abréviation "USINOR"
Société anonyme:, 14, Rue d'Athènes, F-75426 Paris,
Cedex 09 (FR)

(72) Erfinder: Hobert, Gerhard, Kurt-Schumacher-Ring 120,
D-6454 Bruchköbel (DE)
Erfinder: Bönig, Günter, Hinter den Obergärten 1,
D-6000 Frankfurt am Main (DE)
Erfinder: Jury, Egon, Dipl.-Ing.,
Wolfgang-Borchert-Strasse 16, D-6073 Egelsbach (DE)

(74) Vertreter: Fischer, Ernst, Dr., Reuterweg 14,
D-6000 Frankfurt am Main 1 (DE)

## Verfahren und Vorrichtung zur Verhinderung des Gasaustritts aus der Beschickungsöffnung einer Konverter-Umkleidung

Die Erfindung bezieht sich auf ein Verfahren zur Verhinderung des Gasaustritts aus der Beschickungsöffnung einer Konverterumkleidung, die eine erste, bei geschlossener Beschickungsöffnung allein wirksame Gasabsaugöffnung für den Blasbetrieb des Konverters und eine zweite, bei geöffneter Beschickungsöffnung zusätzlich wirksame Gasabsaugöffnung für den Chargierbetrieb aufweist.

Während früher Konverterabgase ungereinigt in die Atmosphäre abgegeben wurden, ist es seit längerer Zeit üblich, die Konverterabgase, zumindest beim Blasbetrieb, abzusaugen und beispielsweise über Elektrofilter zu reinigen, bevor sie in die Atmosphäre abgegeben werden. Dazu wurde der Konverter mit einer Umkleidung versehen, die oberhalb des während des Blasvorgangs senkrecht stehenden Konverters eine Gasabsaugöffnung aufweist. Auf diese Weise konnten jedoch die während des Chargiervorgangs aus dem schräg gestellten Konverter austretenden Gase nicht erfaßt werden. Man hat daher die Konverterumkleidung bis über den Beschickungsbereich vorgezogen und dort eine zweite Gasabsaugöffnung angeordnet. Beide Gasabsaugöffnungen sind üblicherweise an ein gemeinsames Gaskanalsystem angeschlossen, durch das die Gase mittels Gebläse über ein Filter gesaugt und gereinigt an die Atmosphäre abgegeben werden. Um den Chargierbetrieb nicht unnötig zu beeinträchtigen, ist im oberen Teil der Ebene der Beschickungsöffnung üblicherweise noch ein beweglicher Vorhang aus Blechplatten oder Ketten angeordnet, um die Wirksamkeit der zweiten Gasabsaugöffnung zu verbessern.

Es hat sich jedoch herausgestellt, daß trotzdem beim Chargierbetrieb noch erhebliche Gasmengen aus der Konverterumkleidung austreten. Will man vermeiden, daß dieser Gasanteil ungereinigt in die Atmosphäre abgegeben wird, so muß entweder eine dritte Gasabsaugeinrichtung vorgesehen oder die vorhandene erheblich vergrößert werden, um einen ausreichend großen Unterdruck im Bereich der Beschickungsöffnung erzeugen zu können. Hierfür kommt in erster Linie eine sogenannte Hallenabsaugung in Betracht, mittels derer der gesamte Gasinhalt der Werkshalle erfaßt werden kann. Derartige Anlagen sind jedoch sehr unwirtschaftlich, da sie für sehr große Gasmengen ausgelegt werden müssen, die, verglichen mit dem Konverterabgas, nur geringfügig verschmutzt sind. Da außerdem eine Verschmutzung des Gasvolumens der Werkshalle nur intervallweise beim Chargieren auftritt, würde eine Hallenabsaugung nur zeitweilig erforderlich sein. Man müßte also die Hallenabsaugung über große Zeitintervalle, also praktisch unnötigerweise durchlaufen lassen, so daß zu den hohen Investitionskosten noch erhebliche Betriebskosten hinzukämen. Andererseits würde eine nur

bedarfsweise Einschaltung der Hallenabsaugung zusätzlichen Aufwand für entsprechen[.] Steuereinrichtungen erfordern. Eine derart[.] Fahrweise würde sich außerdem nachteilig a[.] die Lebensdauer der Hallenabsaugeinrichtur[.] auswirken.

Wenn der Gasaustritt aus der Beschickung[.] öffnung durch eine Vergrößerung des Unte[.] drucks in der Konverterumkleidung verhinde[.] werden soll, muß nach überschlägigen Berecl[.] nungen und Modellversuchen die vorhanden[.] Absaugleistung für einen um 50 bis 100[.] größeren Volumenstrom ausgelegt werde[.] wodurch sich die Anlage in unvertretbarer Weis[.] verteuern würde.

Es besteht somit die Aufgabe, den Gasaustri[.] aus der Konverterumkleidung beim Chargierbe[.] trieb anderweitig zu verhindern, d. h. de[.] Aufwand hierfür im Vergleich zur Hallenabsau[.] gung oder Vergrößerung der vorhandene[.] Gasabsaugung erheblich geringer zu halten.

Diese Aufgabe wird erfindungsgemäß durcl[.] ein Verfahren der eingangs beschriebenen Ar[.] gelöst, indem während des Chargierbetriebes i[.] die Beschickungsöffnung, ggfs. an der davo[.] hängenden Roheisenpfanne oder Schrottmuld[.] vorbei, mittels beliebig einstellbarer Düse ei[.] Hilfsgasstrahl eingeblasen und durch Variatio[.] des Düsenanstellwinkels zur Ebene der Beschik[.] kungsöffnung und Veränderung der Düsenposi[.] tion im Rahmen der gegebenen Platzverhältniss[.] die jeweils optimale Strahlwirkung eingestell[.] wird.

Durch umfangreiche Modellversuche wurde festgestellt, daß auf diese Weise der Gasaustritt beim Chargieren fast vollständig verhindert werden kann, so daß eine aufwendige Hallenabsaugung oder eine Vergrößerung der vorhandenen Gasabsaugung nicht mehr erforderlich ist.

Der Hilfsstrahl überstreicht erfindungsgemäß die Beschickungsöffnung, insbesondere in dem Bereich, in dem der stärkste Gasaustritt zu erwarten ist, wobei die austretenden Gasmengen mitgerissen und in die Umkleidung zurückgeführt werden. Infolge der Injektorwirkung des Hilfsgasstrahls wird der Gasaustritt nicht nur im unmittelbar überstrichenen Bereich der Beschickungsöffnung verhindert, sondern weitgehend auch in den benachbarten Bereichen, so daß beim Chargieren praktisch kein Schwallgas mehr austritt.

In weiterer Ausbildung des Erfindungsgedankens ist vorgesehen, daß der Hilfsgasstrahl unter einem Winkel von 8 bis 32° gegenüber der Horizontalen nach oben gerichtet und unter einem Winkel von 20 bis 35° gegenüber der vertikalen Mittelebene der Beschickungsöffnung angestellt eingeblasen wird. Bei den Modellversuchen wurde ermittelt, daß es zweckmäßig ist, den Hilfsgasstrahl mit einer Austrittsgeschwindigkeit von 150 bis 220 m/s, vorzugsweise von 170 bis 210 m/s einzublasen. Ferner wurde ermittelt, daß der Hilfsgasstrom 0,5 bis 5% des Absaugvolumens betragen muß.

Zur Durchführung des Verfahrens ist eine Vorrichtung vorgesehen, bestehend aus einer den Konverter gasdicht umschließenden Umkleidung mit einer durch Schiebetüren verschließbaren Beschickungsöffnung, einer ersten, senkrecht über dem Konverter angeordneten und bei Blasbetrieb allein wirksamen Gasabsaugöffnung, mit einer zweiten, oberhalb der Beschickungsöffnung angeordneten, bei geöffneter Schiebetür zusätzlich wirksamen Gasabsaugöffnung sowie mit einem aus Blechplatten oder Ketten bestehenden, die zweite Gasabsaugöffnung zur Beschickungsseite hin verlängernden Vorhang sowie einer vor der Beschickungsöffnung angeordneten Düse zum Einblasen eines Hilfsgasstrahles.

Vorzugsweise wird die Düse gegenüber der Horizontalen unter einem Winkel von 8 bis 32° nach oben und gegenüber der vertikalen Mittelebene unter einem Winkel von 20 bis 35° in Richtung auf die Beschickungsöffnung angestellt, wobei die Achse des Hilfsgasstrahls die Ebene der Beschickungsöffnung in einem Punkt schneidet, der 10 bis 30% der Öffnungsbreite B von einem seitlichen Rand und 10 bis 40% der Öffnungshöhe H vom oberen Rand der Beschickungsöffnung entfernt ist. Ferner ist es zweckmäßig, daß zusätzlich in der für die Beschickung des Konverters verwendeten Schrottmulde in deren vorderen Teil eine Klappe angeordnet ist. Dabei ist der Drehpunkt der Klappe so anzuordnen, daß er in Beschickungsstellung der Schrottmulde innerhalb des aus Blechplatten oder Ketten bestehenden Vorhangs liegt.

Weitere Einzelheiten und Vorteile des Erfindungsgedankens werden anhand der Figuren näher erläutert.

Fig. 1 zeigt stark vereinfacht einen Konverter mit Roheisenpfanne in Chargierstellung.

Fig. 2 zeigt in Ansicht und Schnitt die Beschickungsöffnung mit Roheisenpfanne.

Fig. 3 zeigt in Ansicht und Schnitt die Beschickungsöffnung mit Schrottmulde.

Fig. 4 zeigt ein Diagramm der Ergebnisse von Modellversuchen.

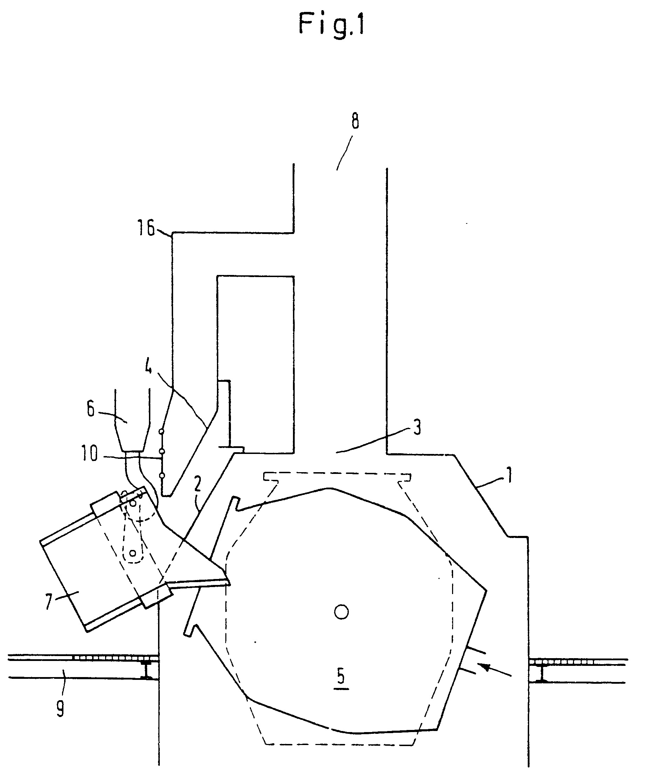

Gemäß Fig. 1 befindet sich der schwenkbare Konverter 5 innerhalb einer Konverterumkleidung 1, die u. a. eine verschließbare Beschickungsöffnung 2 aufweist. Während des Blasbetriebes (gestrichelte Darstellung des Konverters) ist die Beschickungsöffnung 2 geschlossen und die anfallenden Gasmengen werden durch die Absaugöffnung 3 und den Sammelkanal 8 abgesaugt und einer nicht dargestellten Entstaubungsanlage zugeführt. Es ist gewährleistet, daß beim Blasbetrieb keine Schwallgase aus der Konverterumkleidung 1 austreten können. Zum Chargieren muß die Beschickungsöffnung 2 geöffnet und der Konverter 5 in die dargestellte Chargierstellung geschwenkt werden. Chargiert wird entweder flüssiges Roheisen mittels an einem Kranhaken 6 hängender Roheisenpfanne 7 oder aber Schrott mittels Schrottmulde 13 (vgl.

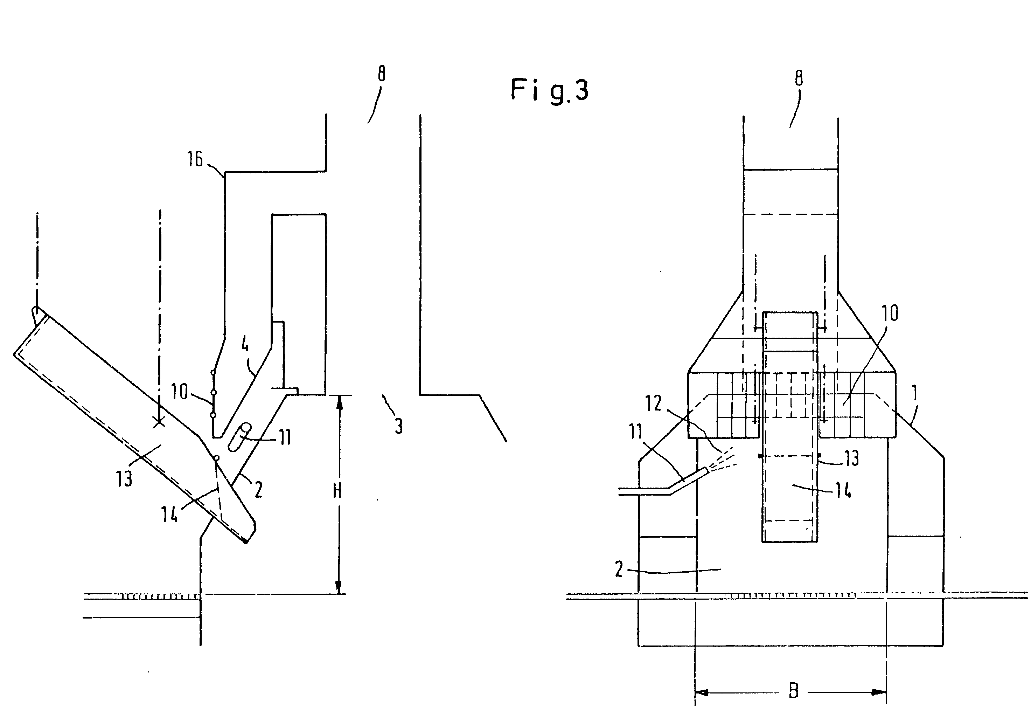

Fig. 3). Da der Korverter 5 auch während des Chargierbetriebes durch seinen Boden mit Druckgas beaufschlagt werden muß, treten aus seiner Öffnung in erheblichem Umfang Schwallgase aus, die nicht ungereinigt in die Werkshalle oder in die Umgebung abgelassen werden können. Es ist daher schon bei herkömmlichen Anlagen vorgesehen, unmittelbar oberhalb des Chargierbereiches eine weitere Gasabsaugöffnung 4 anzuordnen, die über einen Kanal 16 an den gemeinsamen Abgaskanal 8 angeschlossen ist. Diese zweite Absaugöffnung 4 ist meist mit einem Vorhang 10 aus Ketten oder Blechplatten kombiniert, um den Austrittsquerschnitt oberhalb der Chargiergeräte möglichst weitgehend zu verschließen. Mit 9 ist die Bedienungsbühne gekennzeichnet.

Wie eingangs beschrieben und aus der Darstellung in Fig. 1 ersichtlich, bestehen erhebliche konstruktive und räumliche Schwierigkeiten, das Austreten von Schwallgasen aus der Beschickungsöffnung 2 während des Chargierbetriebes zu verhindern oder jedenfalls weitgehend einzuschränken. Dies wird erfindungsgemäß dadurch erreicht, daß während des Chargierbetriebes in die Beschickungsöffnung ein Hilfsgasstrahl eingeblasen wird.

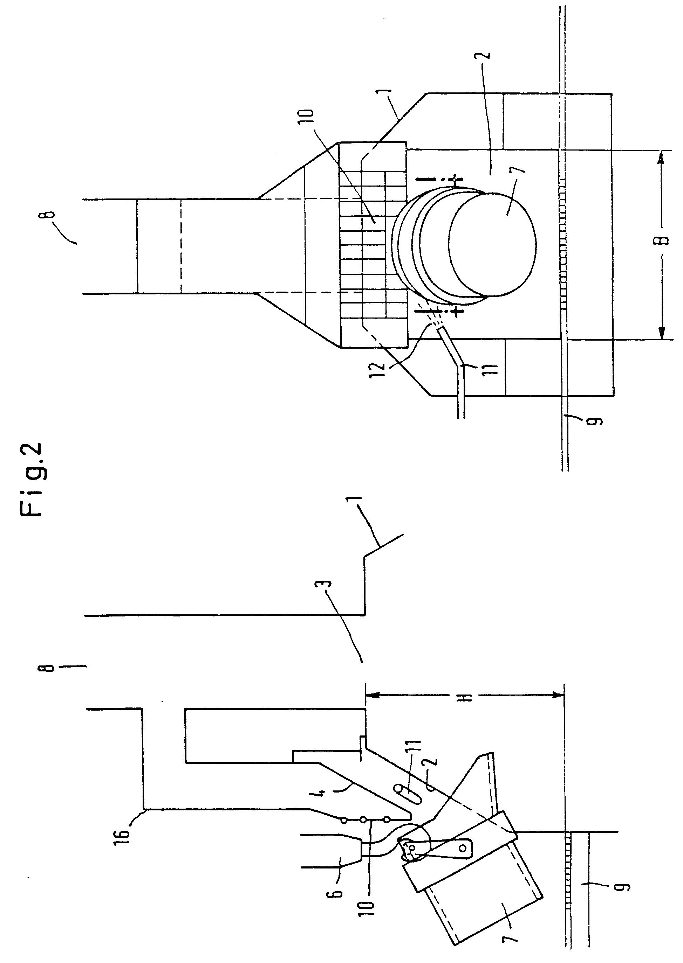

In Fig. 2 ist die Anordnung der Düse 11 mit Bezug auf die in Ansicht und Schnitt dargestellte Beschickungsöffnung 2 gezeigt. Die Düse 11 ist so angeordnet, daß der Hilfsgasstrahl 12 insbesondere den Teil der Beschickungsöffnung 2 überstreicht, in dem der Hauptteil der austretenden Schwallgase zu erwarten ist. Ferner muß beachtet werden, daß die Düse nur außerhalb des Arbeitsbereiches der Chargiergeräte angeordnet werden kann, um deren Funktion nicht zu stören. Die Anordnung der Düse 11 erfolgt daher vorzugsweise in dem durch die Ansprüche 6 und 7 näher gekennzeichneten Bereich, wobei mit H und B die Höhe und Breite der Beschickungsöffnung bezeichnet sind. Alle übrigen Ziffern haben die gleiche Bedeutung wie in Fig. 1.

In Fig. 3 ist der Bereich der Beschickungsöffnung 2 noch einmal mit einer davorhängenden Schrottmulde 13 in Ansicht und Schnitt dargestellt. Auch in diesem Fall werden die austretenden Schwallgase durch den Hilfsgasstrahl 12 injektorartig erfaßt und in die Konverterumkleidung 1 zurückgeführt, wo sie über die Gasabsaugöffnung 3 und den Abgaskanal 8 der Entstaubungsanlage zugeführt werden. Auf diese Weise wird das Austreten von Schwallgas im freien Bereich um die Schrottmulde 13 herum weitgehend vermieden. Da jedoch die Schrottmulde 13 in Schrägstellung für einen Teilbereich der Beschickungsöffnung wie ein Kamin wirkt, hat es sich als zweckmäßig erwiesen, in dieser noch eine Klappe 14 anzuordnen. Diese Klappe ist frei pendelnd aufgehängt und wird durch den herausrutschenden Schrott selbsttätig geöffnet; sie fällt auch selbsttätig in die Schließstellung zurück, sobald der Schrottauslauf beendet ist. Damit wird die Wirkung des Hilfsgasstrahles unterstützt und ein Austreten von Schwallgas durch die Schrottmulde 13 verhindert.

Im übrigen haben auch in Fig. 3 die Bezugsziffern die gleiche Bedeutung wie in Fig. 1.

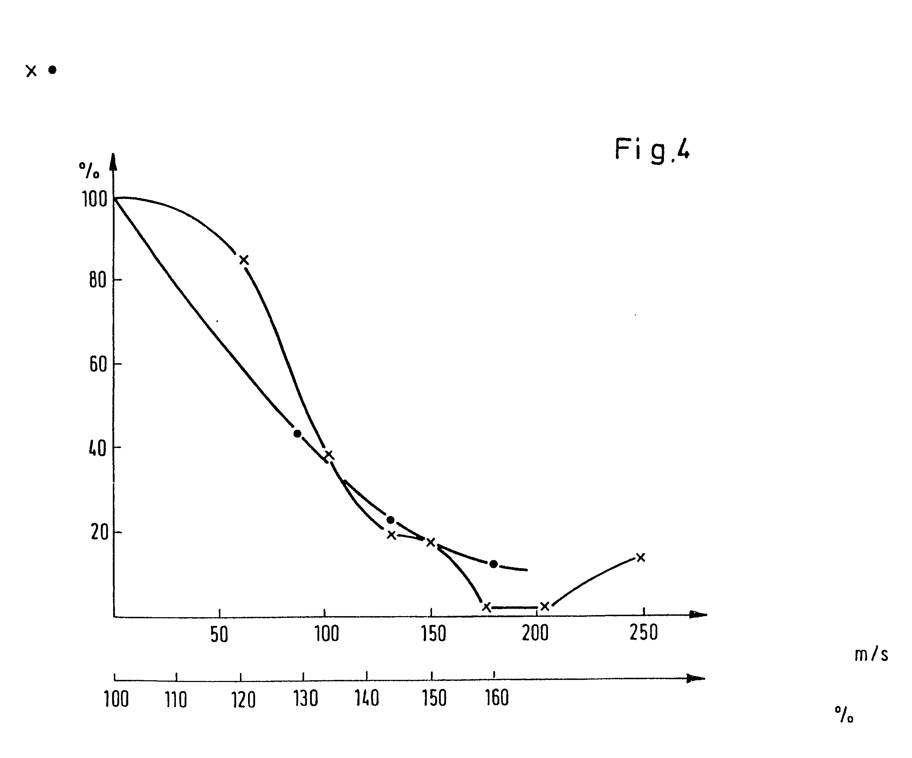

In Fig. 4 sind die Meßergebnisse von Modellversuchen in einem Diagramm zusammengefaßt. Es sind zwei Kurvenverläufe eingezeichnet, und zwar einmal für den Fall, daß die Absauggasmenge bis auf 160% erhöht wird, und zum zweiten für den Fall, daß mit dem erfindungsgemäßen Hilfsgasstrahl gearbeitet wird. Geht man davon aus, daß die Ausschwallgasmenge ohne diese Maßnahme mit 100% bezeichnet wird. so kann die austretende Schwallgasmenge auf etwa 18% reduziert werden, wenn die Absauggasmenge auf 160% erhöht wird. Diese Maßnahme würde einen erheblich höheren Investitionsaufwand erfordern, da die Abgassammelleitung, das Abgasgebläse und die Entstaubungseinrichtung entsprechend größer ausgelegt werden müßten. Wie sich aus dem Verlauf der zweiten Kurve ergibt, kann die austretende Schwallgasmenge auf 20% reduziert werden, wenn für den Hilfsgasstrahl eine Austrittsgeschwindigkeit von 150 m/s gewählt wird. Um die gleiche Wirkung zu erzielen, müßte die Absauggasmenge bereits um 50% erhöht werden. Mit einer weiteren Erhöhung der Austrittsgeschwindigkeit des Hilfsgasstrahles auf 170 bis 200 m/s, kann die austretende Schwallgasmenge auf wenige % begrenzt werden. Um die gleiche Wirkung zu erreichen, müßte die Absauggasmenge auf 200 bis 250% erhöht werden, wie sich aus einer Extrapolation der ersten Kurve unschwer ableiten läßt.

Die zweite Kurve läßt ferner erkennen, daß bei einer weiteren Erhöhung der Austrittsgeschwindigkeit des Hilfsgasstrahles wieder eine größere Schwallgasmenge austritt, woraus sich ergibt, daß es bei optimaler geometrischer Anordnung der Düse für den Hilfsgasstrahl auch eine optimale Austrittsgeschwindigkeit gibt.

Zusammenfassend kann gesagt werden, daß die Modellversuche ergeben haben, daß mit der erfindungsgemäßen Anwendung eines Hilfsgasstrahles das Austreten von Schwallgasen aus der Konverterumkleidung während des Chargierbetriebes mit vergleichsweise geringem Aufwand fast vollständig verhindert werden kann. Selbstverständlich muß die optimale Anordnung der Düse unter den jeweils vorgegebenen Platzverhältnissen erprobt werden. Für die in den Fig. 1 bis 3 dargestellten baulichen Verhältnisse kann die Düsenanordnung gemäß den Vorschriften in den Ansprüchen 6 und 7 vorgenommen werden. Bei davon wesentlich abweichenden Konstruktionen für die Konverterumkleidung bzw. Beschickungsöffnung, kann die optimale Düsenanordnung auch außerhalb der angegebenen Bereiche liegen. Wichtig ist, daß durch die Injektorwirkung des Hilfsgasstrahles die Bereiche der Beschickungsöffnung erfaßt werden, in denen das Maximum der austretenden Schwallgase erwartet wird.

**Patentansprüche**

1. Verfahren zur Verhinderung des Gasaustritts aus der Beschickungsöffnung einer K? verterumkleidung, die eine erste, bei geschlossener Beschickungsöffnung allein wirksam Gasabsaugöffnung für den Blasbetrieb d Konverters und eine zweite, bei geöffnet Beschickungsöffnung zusätzlich wirksame Ga absaugöffnung für den Chargierbetrieb au weist, dadurch gekennzeichnet, daß währer des Chargierbetriebes in die Beschickungsöf nung, ggfs. an der davor hängenden Roheise pfanne oder Schrottmulde vorbei, mittels beli big einstellbarer Düse ein Hilfsgasstrahl eing blasen und durch Variation des Düsenanstellwin kels zur Ebene der Beschickungsöffnung un Veränderung der Düsenposition im Rahmen de gegebenen Platzverhältnisse die jeweils optima le Strahlwirkung eingestellt wird.

2. Verfahren nach Anspruch 1, dadurc gekennzeichnet, daß der Hilfsgasstrahl unte einem Winkel von 8 bis 32° gegenüber de Horizontalen nach oben gerichtet und unte einem Winkel von 20 bis 35° gegenüber de vertikalen Mittelebene der Beschickungsöffnun angestellt eingeblasen wird.

3. Verfahren nach Anspruch 1 oder 2, dadurc gekennzeichnet, daß der Hilfsgasstrahl mit eine Austrittsgeschwindigkeit von 150 bis 220 m/s vorzugsweise von 170 bis 210 m/s eingeblaser wird.

4. Verfahren nach einem der Ansprüche 1 bis 3 dadurch gekennzeichnet, daß der Hilfsgasstrorr 0,5 bis 5% des ohne Anwendung des Hilfsgasstromes zu erwartenden Gasaustrittsstromes beträgt.

5. Vorrichtung zur Durchführung des Verfahrens nach einem der Ansprüche 1 bis 4, bestehend aus einer einen Konverter gasdicht umschließenden Umkleidung mit einer durch Schiebetüren verschließbaren Beschickungsöffnung, einer ersten senkrecht über dem Konverter angeordneten und bei Blasbetrieb allein wirksamen Gasabsaugöffnung, mit einer zweiten, oberhalb der Beschickungsöffnung angeordneten, bei geöffneter Schiebetür zusätzlich wirksamen Gasabsaugöffnung, sowie mit einem aus Blechplatten oder Ketten bestehenden, die zweite Gasabsaugöffnung zur Beschickungsseite hin verlängernden Vorhang, dadurch gekennzeichnet, daß vor der Beschickungsöffnung (2) eine Düse (11) zum Einblasen eines Hilfsgasstrahles (12) angeordnet ist.

6. Vorrichtung nach Anspruch 5, dadurch gekennzeichnet, daß die Düse (11) gegenüber der Horizontalen unter einem Winkel von 8 bis 32° nach oben und gegenüber der vertikalen Mittelebene unter einem Winkel von 20 bis 35° in Richtung auf die Beschickungsöffnung (2) angestellt ist.

7. Vorrichtung nach Anspruch 6, dadurch gekennzeichnet, daß die Achse des Hilfsgasstrahles (12) die Ebene der Beschickungsöffnung (2) in einem Punkt schneidet, der 10 bis 30% der Öffnungsbreite B von einem seitlichen Rand und 10 bis 40% der Öffnungshöhe H vom oberen Rand der Beschickungsöffnung (2) entfernt ist.

8. Vorrichtung zur Durchführung des Verfahrens nach einem der Ansprüche 1 bis 4, dadurch gekennzeichnet, daß zusätzlich in der für die Beschickung des Konverters (5) verwendeten Schrottmulde (13) in deren vorderen Teil eine Klappe (14) angeordnet ist.

9. Vorrichtung nach Anspruch 8, dadurch gekennzeichnet, daß der Drehpunkt der Klappe (14) so angeordnet ist, daß er in Beschickungsstellung der Schrottmulde (13) innerhalb des aus Blechplatten oder Ketten bestehenden Vorhangs (10) liegt.

## Claims

1. A method of preventing an escape of gas from the charging opening of a converter enclosure which has a first gas exhaust opening for the blowing operation of the converter, which gas exhaust opening is effective alone when the charging opening is closed, and a second gas exhaust opening for the charging operation, which second gas exhaust opening is additionally effective when the charging opening is open, characterized in that an auxiliary gas jet is blown during the charging operation into the charging opening, if desired past the crude iron ladle or scrap charging box suspended in front of the charging opening and the optimum jet action is adjusted by a variation of the angle of the nozzle to the plane of the charging opening and by a change of the nozzle position within the space which is available.

2. A method according to claim 1, characterized in that the auxiliary gas jet is directed upwardly at an angle of 8 to 32 degrees from the horizontal and is blown in at an angle of 20 to 35 degrees from the vertical center plane of the charging opening.

3. A method according to claim 1 or 2, characterized in that the auxiliary gas jet is blown in ant an exit velocity of 150 to 220 m/s, preferably 170 to 210 m/s.

4. A method according to any of claims 1 to 3, characterized in that the auxiliary gas stream amounts to 0.5 to 5% of the exiting gas stream which would have to be expected if the auxiliary gas stream were not employed.

5. Apparatus for carrying out the method according to any of claims 1 to 4, comprising an which gastightly encloses a converter and has a charging opening which is adapted to be closed by sliding doors, a first gas exhaust opening, which is vertically disposed over the converter and is effective alone during the blowing operation, a second gas exhaust opening, which is disposed above the charging opening and is additionally effective when the sliding door is closed, and a curtain, which consists of metal plates or chains and increases the second gas exhaust opening toward the charging side, characterized in that a nozzle (11) for blowing in an auxiliary gas jet (12) is disposed in front of the charging opening (2).

6. Apparatus according to claim 1, characterized in that the nozzle (11) extends upwardly from the horizontal at an angle of 8 to 32 degrees and extends at an angle of 20 to 35 degrees from the vertical center plane toward the charging opening (2).

7. Apparatus according to claim 6, characterized in that the axis of the auxiliary gas jet (12) intersects the plane of the charging opening (2) at a point which is spaced 10 to 30% of the width B of the opening from a side edge and 10 to 40% of the height H of the opening from the top edge of the charging opening (2).

8. Apparatus for carrying out the method according to any of claims 1 to 4, characterized in that a flap (14) is additionally provided in the forward portion of the scrap charging box (13) used to charge the converter (5).

9. Apparatus according to claim 8, characterized in that the pivotal axis of the flap (14) is so arranged that it is disposed inside the curtain (10) consisting of metal plates or chains when the scrap charging box (13) is in charging position.

## Revendications

1. Procédé pour empêcher la sortie de gaz de la bouche d'alimentation de la chambre entourant la cuve de convertisseur qui comprend première bouche d'aspiration des gaz, qui est seule en action lorsque la bouche d'alimentation est fermée, pour le régime de soufflage du convertisseur et une deuxième ouverture d'aspiration des gaz qui est en supplément en action lorsque la bouche d'alimentation est ouverte pour le régime de chargement, caractérisé en ce que, pendant l'opération de chargement, un jet de gaz auxiliaire est insufflé dans la bouche d'alimentation, éventuellement en le faisant passer le long de la poche de fonte brute ou de la goulotte à ribblons suspendue devant cette bouche, au moyen d'une buse réglable à volonté et en ce que l'action du jet qui est optimale dans chaque cas est réglée, par variation de l'angle d'incidence de la buse par rapport au plan de la bouche d'alimentation et modification de la position de la buse dans les limites des conditions de place données.

2. Procédé suivant la revendication 1, caractérisé en ce que le jet de gaz auxiliaire est insufflé en étant orienté vers le haut sous un angle de 8 à 32° par rapport à l'horizontale et réglé en incidence sous un angle de 20 à 35° par rapport au plan médian vertical de la bouche d'alimentation.

3. Procédé suivant la revendication 1 ou 2, caractérisé en ce que le jet de gaz auxiliaire est insufflé avec une vitesse de sortie de 150 à 220 m/s, de préférence de 170 à 210 m/s.

4. Procédé suivant l'une des revendications 1 à 3, caractérisé en ce que le courant de gaz auxiliaire représente 0,5 à 5% du courant de sortie de gaz qu'on doit escompter sans utilisation du courant de gaz auxiliaire.

5. Dispositif pour la mise en oeuvre du procédé suivant l'une des revendications 1 à 4, composé d'une chambre qui entoure le convertisseur à joint étanche aux gaz et est munie d'une bouche d'alimentation pouvant être obturée par des portes coulissantes, d'une première bouche d'aspiration des gaz, disposée à la verticale au-dessus du convertisseur et qui est seule en action dans le régime de soufflage, d'une deuxième bouche d'aspiration des gaz, disposée au-dessus de la bouche d'alimentation qui entre en action en supplément lorsque la porte coulissante est ouverte, ainsi que d'un rideau composé de plaques de tôles ou de chaînes qui prolonge la deuxième bouche d'aspiration des gaz vers le côté d'alimentation, caractérisé en ce qu'une buse (11) est disposée devant la bouche d'alimentation (2) pour insuffler un jet de gaz auxiliaire (12).

6. Dispositif suivant la revendication 5, caractérisé en ce que la buse (11) est inclinée : l'horizontale, avec un angle de 8 a 32° vers haut, et sur le plan médian vertical avec un an de 20 à 35°, en direction de la bouc d'alimentation (2).

7. Dispositif suivant la revendication caractérisé en ce que l'axe du jet de g auxiliaire (12) coupe le plan de la bouc d'alimentation (2) en un point qui est éloig d'un bord latéral de 10 à 30% de la largeur B de bouche et du bord supérieur de la bouct d'alimentation (2) de 10 à 40% de la hauteur H la bouche.

8. Dispositif pour la mise en oeuvre du procéc suivant l'une des revendications 1 à 4, caract risé en ce qu'en supplément, une trappe (14) e agencée dans la goulotte à ribblons (13) utilise pour l'alimentation du couvertisseur (5) dans partie avant de cette goulotte.

9. Dispositif suivant la revendication : caractérisé en ce que le point de rotation de l trappe (14) est disposé de manière que, dans l position d'alimentation de la goulotte à ribblon (7), il se trouve à l'intérieur du rideau (1C composé de plaques de tôle ou de chaînes.

# Fig.1

# Fig.2

# Fig.3

0 021 482

Fig.4